# EUROPÄISCHE PATENTSCHRIFT

(11) **EP 2 673 525 B1**
(45) Veröffentlichungstag und Bekanntmachung des Hinweises auf die Patenterteilung: **07.09.2016**
(21) Anmeldenummer: 11796924.6
(22) Anmeldetag: 09.12.2011
(51) Int. Cl.: F16D 65/12

(54) **VERBUNDBREMSSCHEIBE**
COMPOSITE BRAKE DISC
DISQUE DE FREIN COMPOSITE

(30) Priorität: 11.02.2011 DE 102011011004
(43) Veröffentlichungstag der Anmeldung: 18.12.2013
(73) Patentinhaber: Daimler AG, 70327 Stuttgart (DE)
(72) Erfinder: HENTRICH, Cornelius, 71336 Waiblingen (DE); MAYER, Ralph, 71034 Böblingen (DE)
(74) Vertreter: JENSEN & SON
(86) Internationale Anmeldenummer: PCT/EP2011/006205
(87) Internationale Veröffentlichungsnummer: WO 2012/107068

(56) Entgegenhaltungen:
- DE-A1- 3 940 313
- DE-A1- 10 125 111
- US-A- 6 135 247
- US-A1- 2005 056 498

## Beschreibung

Die vorliegende Erfindung betrifft eine Verbundbremsscheibe, insbesondere für ein Kraftfahrzeug, umfassend einen Bremsscheibentopf und einen Bremsring gemäß Anspruch 1, und ein Verfahren zur Herstellung so einer Verbundbremsscheibe, gemäß Anspruch 4.

Eine gattungsgemäße Verbundbremsscheibe geht z.B. aus DE-A-101 25 111 hervor.

Es sind derzeit einteilige Gussbremsscheiben im Einsatz, bei denen sowohl der Bremsring als auch der Bremsscheibentopf aus einem Gussmaterial hergestellt sind. Nachteilig an dieser einteiligen Ausführungsform ist das hohe, ungefederte Gewicht. Um nun das Gewicht zu reduzieren, werden vermehrt auch Verbundbremsscheiben eingesetzt, die einen Topf aus einem Aluminiumwerkstoff und einen Bremsring aus Grauguss aufweisen. Durch diese Materialpaarung kann das Gewicht einer derartigen Verbundbremsscheibe reduziert werden, jedoch führen die unterschiedlichen Wärmeausdehnungskoeffizienten des Materials des Bremsscheibentopfes und des Bremsringes zu Problemen. Deshalb setzen sich vermehrt auch Verbundbremsscheiben im Markt durch, deren Bremsscheibentopf aus Stahl oder einem anderen eisenhaltigen Material gefertigt sind. Bevorzugt wird dabei Stahlblech verwendet, um eine vorteilhafte Gewichtsreduktion der Verbundbremsscheibe zu erreichen.

Aus der DE 10 2009 012 216 A1 ist eine derartige Verbundbremsscheibe mit einem Bremsscheibentopf aus Stahlblech und einem Bremsring bekannt. Dabei ist der Bremsring zweiteilig aus zwei Reibringen ausgebildet, die über Verbindungsnoppen miteinander verbunden und zueinander beabstandet sind. Durch die Beabstandung der beiden Reibringe bilden sich zwischen den Reibringen Kanäle aus, durch die die Umgebungsluft strömen und so Wärme abführen kann. Einer der Reibringe ist mit einem innenseitigen Zahnprofil ausgestattet, in das das Zahnprofil des Bremsscheibentopfes eingeführt ist. Zur axialen Sicherung und Halterung sind am Bremsscheibentopf Halteelemente und Laschen ausgebildet. Durch die Laschen und Halteelementen kann eine schwimmende Lagerung des Reibringes am Bremsscheibentopf erzielt werden, sodass ein gewisses Spiel in axialer wie auch in radialer Richtung bestehen bleibt. Damit können beispielsweise unterschiedliche Wärmeausdehnungen des Reibringes und des Bremsscheibentopfes ausgeglichen werden.

Die vorliegende Erfindung beschäftigt sich mit dem Problem, für eine Verbundbremsscheibe der gattungsgemäßen Art eine verbesserte oder zumindest eine alternative Ausführungsform anzugeben, die sich insbesondere durch eine einfache, bauteilzentrierte Positionierung der Fügepartner Bremsscheibentopf und Bremsring auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen Bremsscheibentopf vor dem Fügeprozess zumindest an seinem offenen Ende mit einem Bremsscheibentopf-Zahnprofil auszustatten und den zumindest einen Bremsring derartig auszugestalten, dass er vor dem Fügeprozess mit einem innenseitigen Bremsring-Zahnprofil ausgestattet ist, wobei die Bremsscheibentopf-Zahnflanken des Bremsscheibentopf-Zahnprofiles sowie die Bremsring-Zahnflanken des Bremsring-Zahnprofil im Fügebereich unterschiedliche Passformen aufweisen.

Bevorzugt weist das Bremsscheibentopf-Zahnprofil Bremsscheibentopf-Zahnflanken in Kreisbogen-Form auf, wogegen das Bremsring-Zahnprofil Bremsring-Zahnflanken in Evolventen-Form aufweist.

Weisen beide Zahnprofile ein Übermaß zueinander auf, können die beiden Komponenten mittels Übermaß gefügt werden wodurch zwischen den einzelnen Fügepartnern eine Spannung besteht, die eine Fixierung von Bremsscheibentopf und Bremsring ermöglicht. Durch eine derartige Ausgestaltung der Zahnflanken von Bremsring und Bremsscheibentopf gelingt eine einfache, bauteilzentrierte Positionierung der Fügepartner mittels des Prinzips der Flankenzentrierung, wobei die Bremsring-Zahnflanken und/oder die Bremsscheibentopf-Zahnflanken eine elastisch-plastische Verformung während des Fügeprozesses erfahren können. Es handelt sich bei der genannten Verzahnung nicht um eine Steckverzahnung, wie sie beispielsweise in DIN 5480 beschrieben ist, da an zumindest einem Zahnprofil eine elastisch-plastische Verformung auftritt. Somit handelt es sich hierbei hauptsächlich um eine flankenzentrierte Konstruktion mit dem Ziel definierte Spannungszustände auch unter unterschiedlichen Drehmomentbelastungen und unterschiedlich großer Überdeckung von Bremsscheibentopf und Bremsring zu erzielen.

Bei einer vorteilhaften Weiterbildung der erfindungsgemäßen Lösung ist zwischen den Zahnköpfen und den Zahnfüßen der Zahnprofile in allen betriebsbedingten Temperaturbereichen ein Spalt angeordnet, sodass die Zahnköpfe und Zahnfüße keinen Traganteil aufweisen und somit die Drehmomente hauptsächlich über die Zahnflanken übertragen werden, wobei der Grundcharakter einer Flankenzentrierung gegeben ist.

Der Bremsscheibentopf weist in unverbautem Zustand eine konische Grundform auf, wobei der Bremsscheibentopf zu seinem offenen Ende hin einen größer werdenden Bezugsdurchmesser der Verzahnung aufweist. Dadurch kann die zunehmende Elastizität kompensiert und auch in axialer Richtung ein gleichmäßiger Traganteil erwirkt werden.

Des Weiteren ist es vorteilhaft, wenn der Kreisbogen der topfseitigen Zahnflanken gegenüber der Zahnflankenform im Bremsring so ausgelegt ist, dass ein möglichst breites Tragbild über die Zahnflanken zustande kommt, damit die Flächenpressung möglichst gering gehalten wird und möglichst gleichmäßig verteilt ist. Dabei ist unter dem Tragbild die Kontaktzone der Zahnflanken zueinander im verbauten Zustand zu verstehen.

Während des Fügeprozesses erfährt zumindest der Bremsscheibentopf im Fügebereich eine elastische sowie eine elastisch-plastische Verformung. Dadurch erlangt man eine höhere und effizientere Werkstoffausnutzung als bei konventionell elastischer Auslegung. Nachgewiesen werden kann die elastisch-plastische Verformung durch höhere Einpresskräfte beim erstmaligen Fügen im Vergleich zu einem wiederholten, zweiten Fügevorgang.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine erfindungsgemäße zweiteilige Verbundbremsscheibe mit einem Bremsscheibentopf und zwei Bremsringen,
- Fig. 2: einen Fügebereich des Bremsscheibentopfes und eines Bremsringes,
- Fig. 3: einen Zahn des Bremsscheibentopfes,
- Fig. 4: einen Einpresskraftverlauf bei erstmaligem und wiederholten Fügen,
- Fig. 5: ein offenes Ende des Bremsscheibentopfes mit einer umlaufenden Fase.

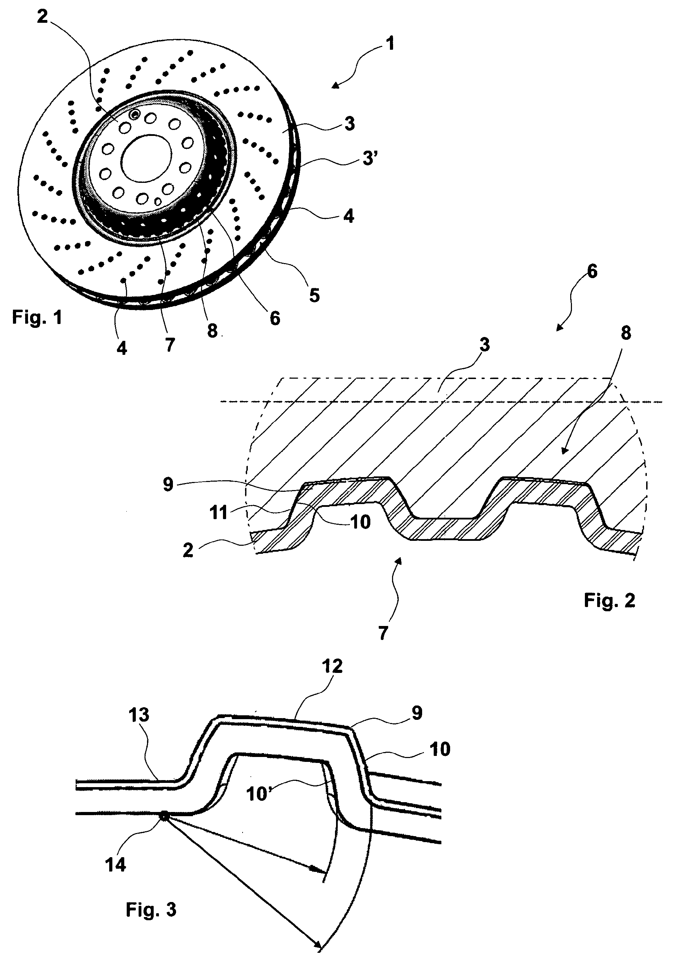

Wie in Fig. 1 dargestellt, weist eine Verbundbremsscheibe 1 einen Bremsscheibentopf 2 und zumindest einen Bremsring 3,3' auf. Sind zwei Bremsringe 3,3' vorgesehen, so können die Bremsringe 3,3' mittels mehrerer Verbindungsnoppen 4 miteinander verbunden und zueinander beabstandet sein, sodass sich zwischen den Bremsringen 3,3' mehrere Kanäle 5 ausbilden, durch die Umgebungsluft strömen und so die entstehende Reibungswärme abführen kann. In einem Fügebereich 6 weist der Bremsscheibentopf 2 ein nach außen gerichtetes Bremsscheibentopf-Zahnprofil 7 auf, das in Wirkverbindung mit einem innenseitigen Bremsring-Zahnprofil 8 des zumindest einen Bremsringes 3 steht, sodass zwischen dem Bremsscheibentopf 2 und dem zumindest einen Bremsring 3 Drehmomente übertragen werden können.

In Fig. 2 ist der Fügebereich 6, in dem der Bremsscheibentopf 2 mit dem zumindest einem Bremsring 3 verbunden ist, dargestellt. Hierbei wird ersichtlich, dass der

Bremsscheibentopf 2 zumindest im Fügebereich 6 dünnwandig ausgebildet ist, wobei eine Ausgangswandstärke des Bremsscheibentopfes 2 zumindest im Fügebereich 6 vor dem Fügeprozess in unverbautem Zustand zwischen 1,5 mm und 5 mm betragen kann. Bevorzugt ist eine Ausgangswandstärke von 2,5 mm. Des Weiteren kann der Fügebereich 6 eine Fügelänge von 10 bis 15 mm und bevorzugt von 12,5 mm aufweisen. Eine derartige Fügelänge kann zudem bei einem Fügedurchmesser von 160 mm bis 200 mm zur Anwendung kommen. Dabei versteht man unter dem Fügedurchmesser den Bezugsdurchmesser der Verzahnung 7,8. In einer derartigen Ausführungsform mit den vorbeschriebenen Fügelängen und Fügedurchmessern tritt somit ein Verhältnis von Fügelänge zu Fügedurchmesser von deutlich größer 1:10 auf. Dies stellt für übliche Welle-Nabe-Verbindungen ein extremes Verhältnis dar und kann auch für andere Fügelängen und Fügedurchmesser zur Anwendung kommen.

Mehrere Bremsscheibentopf-Zähne 9 greifen dabei in das Bremsring-Zahnprofil 8 ein, wobei sich lediglich jeweils eine außenseitige Bremsscheibentopf-Zahnflanke 10 an einer Bremsring-Zahnflanke 11 abstützt, so dass die Drehmomente hauptsächlich über die Zahnflanken 10,11 übertragen werden.

Fig. 3 zeigt eine mögliche Ausgestaltung des Bremsscheibentopf-Zahnes 9 mit der außenseitigen kreisförmigen Bremsscheibentopf-Zahnflanke 10. Dabei kann sowohl die außenseitige Bremsscheibentopf-Zahnflanke 10 als auch eine innenseitige Bremsscheibentopf-Zahnflanke 10' eine kreisförmige Form aufweisen. Ein Bremsscheibentopf-Zahnkopf 12 ist ebenso wie ein Bremsscheibentopf-Zahnfuß 13 abgeflacht ausgebildet. Als ein Bezugspunkt 14, der als Kreismittelpunkt für die jeweiligen kreisförmigen Bremsscheibentopf-Zahnflanken 10,11 dient, kann eine Stelle im Bereich des Bremsscheibentopf-Zahnfußes 13 innenseitig oder außenseitig herangezogen werden.

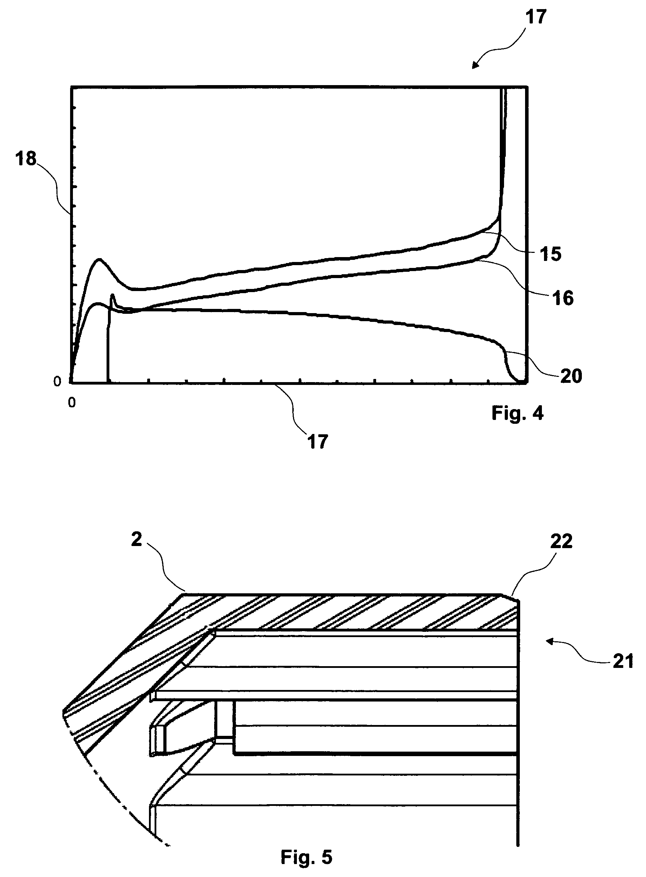

Aus der Fig. 4 wird ersichtlich, dass ein Einpresskraftverlauf 15 einer ersten Verpressung des Bremsscheibentopfes 2 mit dem zumindest einem Bremsring 3 eine höhere Kraft erfordert, als ein Einpresskraftverlauf 16 einer zweiten Verpressung des Bremsscheibentopfes 2 mit dem zumindest einem Bremsring 3. Des Weiteren ist in einem in der Fig. 4 dargestellten Kraft-Weg-Diagramm 17 auf der Ordinate 18 die Kraft abgetragen, während auf der Abszisse 19 der Weg abgetragen ist. Des Weiteren ist auch ein Einpresskraftverlauf 20 beim Auspressen des Bremsscheibentopfes 2 aus dem zumindest einem Bremsring 3 zwischen der ersten Verpressung und der zweiten Verpressung dargestellt. Die in dem Kraft-Weg-Diagramm 17 dargestellten Einpresskraftverläufe 15,16 der ersten und zweiten Verpressung des Bremsscheibentopfes 2 mit dem zumindest einem Bremsring 3 lassen den Rückschluss zu, dass zumindest der Bremsscheibentopf 2 bei der ersten Verpressung mit dem zumindest einem Bremsring 3 neben einer elastischen auch eine elastisch-plastische Verformung erfährt.

Ein in Fig. 5 dargestelltes offenes Ende 21 des Bremsscheibentopfes 2 kann eine Fase 22 aufweisen, die am Bremsscheibentopf 2 außenseitig angeordnet ist. Diese Fase 22 kann umlaufend an den Bremsscheibentopf-Zahnflanken 10, den Bremsscheibentopf-Zahnköpfen 12 und/oder an den Bremsscheibentopf-Zahnfüßen 13 ausgebildet sein. Durch diese Fase 22 kann der Bremsscheibentopf 2 einfacher mit dem zumindest einem Bremsring 3 miteinander verbunden bzw. zueinander gefügt werden.

Durch die erfindungsgemäße Bremsscheibe 1 lassen sich folgende Vorteile erzielen:
- eine einfache, bauteilzentrierte Positionierung der Fügepartner 2,3,
- eine Gewichtsreduzierung im Vergleich zu einteiligen Gussbremsscheiben,
- eine besonders effektive Werkstoffausnutzung durch die elastisch-plastische Verformung beim Fügen des Bremstopfes 2 mit der zumindest einen Bremsscheibe 3,3'.

## Patentansprüche

1. Verbundbremsscheibe für ein Kraftfahrzeug, umfassend einen Bremsscheibentopf (2) und zumindest einen zugehörigen Bremsring (3, 3'), die mittels eines Fügeprozesses miteinander verbunden sind, wobei in einem Fügebereich (6) ein innenseitiges Bremsring-Zahnprofil (8) in ein Bremsscheibentopf-Zahnprofil (7) eingreift,
die Bremsscheibentopf-Zahnflanken (10) des Bremsscheibentopf-Zahnprofiles (7) sowie die Bremsring-Zahnflanken (11) des Bremsring-Zahnprofil (8) im Fügebereich (6) unterschiedliche Passformen aufweisen, **dadurch gekennzeichnet dass**
der Bremsscheibentopf (2) vor dem Fügeprozess eine konische Grundform aufweist und zu seinem offenen Ende (21) hin einen größer werdenden Bezugsdurchmesser der Verzahnung aufweist.

2. Verbundbremsscheibe nach Anspruch 1,
**dadurch gekennzeichnet, dass**
das Bremsscheibentopf-Zahnprofil (7) Bremsscheibentopf-Zahnflanken (10) in Kreisbogen-Form aufweist, wogegen das Bremsring-Zahnprofil (8) Bremsring-Zahnflanken (11) in Evolventen-Form aufweist.

3. Verbundbremsscheibe nach Anspruch 1 oder 2,
**dadurch gekennzeichnet, dass**
die jeweiligen Zahnprofile (7,8) Zahnköpfe (12) und Zahnfüße (13) aufweisen, wobei zwischen den Zahnköpfen (12) und den Zahnfüßen (13) der jeweiligen Zahnprofile (7,8) in allen betriebsbedingten Temperaturbereichen ein Spalt angeordnet ist.

4. Verfahren zum Herstellen einer Verbundbremsscheibe,
wobei die Verbundbremsscheibe (1) einen Bremsscheibentopf (2) und zumindest einen zugehörigen Bremsring (3, 3') umfasst,
wobei die Bremsscheibentopf-Zahnflanken (10) des Bremsscheibentopf-Zahnprofiles (7) sowie die Bremsring-Zahnflanken (11) des Bremsring-Zahnprofil (8) im Fügebereich (6) unterschiedliche Passformen aufweisen
wobei der Bremsscheibentopf (2) und der wenigstens eine Bremsring (3, 3') mittels eines Fügeprozesses miteinander verbunden werden,
wobei in einem Fügebereich (6) ein innenseitiges Bremsring-Zahnprofil (8) in ein Bremsscheibentopf-Zahnprofil (7) eingreift,
wobei das innenseitige Bremsring-Zahnprofil (8) und/oder das Bremsscheibentopf-Zahnprofil (7) zumindest im Bereich der jeweiligen Zahnflanken (10,11) aufgrund des Fügeprozesses elastisch-plastisch verformt wird/werden.

## Claims

1. Composite brake disc for a motor vehicle, comprising a brake disc chamber (2) and at least one associated brake rim (3, 3'), which are joined to one another in a joining process, wherein an inside brake rim tooth profile (8) engages with a brake disc chamber tooth profile (7) in a joint region (6),
wherein the brake disc chamber tooth flanks (10) of the brake disc chamber tooth profile (7) and the brake rim tooth flanks (11) of the brake rim tooth profile (8) have different fits in the joint region (6), **characterised in that**
before the joining process, the brake disc chamber (2) has a conical basic shape and a toothing reference diameter which increases towards its open end (21).

2. Composite brake disc according to claim 1,
**characterised in that**
the brake disc chamber tooth profile (7) has brake disc chamber tooth flanks (10) in a circular arc shape, whereas the brake rim tooth profile (8) has brake rim tooth flanks (11) in an involute shape.

3. Composite brake disc according to claim 1 or 2,
**characterised in that**
the respective tooth profiles (7, 8) have tooth crests (12) and tooth bases (13), wherein a gap is provided between the tooth crests (12) and the tooth bases (13) of the respective tooth profiles (7, 8) in all operational temperature ranges.

4. Method for producing a composite brake disc,
wherein the composite brake disc (1) comprises a brake disc chamber (2) and at least one associated brake rim (3, 3'),
wherein the brake disc chamber tooth flanks (10) of the brake disc chamber tooth profile (7) and the brake rim tooth flanks (11) of the brake rim tooth profile (8) have different fits in the joint region (6),
wherein the brake disc chamber (2) and the at least one brake rim (3, 3') are joined to one another in a joining process,,
wherein an inside brake rim tooth profile (8) engages with a brake disc chamber tooth profile (7) in a joint region (6),
wherein the inside brake rim tooth profile (8) and/or the brake disc chamber tooth profile (7) is/are elastically/plastically deformed at least in the region of the respective tooth flanks (10, 11) owing to the joining process.

## Revendications

1. Disque de frein composite pour un véhicule automobile comprenant une cloche (2) de disque de frein et au moins un cylindre creux (3, 3') de frein correspondant qui sont reliés l'un à l'autre selon un processus d'assemblage, dans la zone d'assemblage (6) un profil intérieur (8) de dent de cylindre creux de frein s'engrenant dans un profil (7) de dent de cloche de disque de frein, les flancs (10) de dent de la cloche de disque de frein du profil (7) de dent de la cloche (7) de disque de frein ainsi que les flancs (11) de dent du cylindre creux de frein du profil (8) de dent de cylindre creux de frein présentant différents ajustages dans la zone d'assemblage (6), **caractérisé en ce que** la cloche (2) de disque de frein présente une forme de base conique avant le processus d'assemblage et un diamètre de référence de la denture qui s'élargit en direction de son extrémité ouverte (21).

2. Disque de frein composite selon la revendication 1, **caractérisé en ce que** le profil (7) de dent de la cloche de disque de frein présente des flancs (10) de dent de cloche de disque de frein en forme d'arc de cercle, tandis que le profil (8) de dent de cylindre creux de frein présente des flancs (11) de dent de cylindre creux de frein en forme de développante.

3. Disque de frein composite selon la revendication 1 ou la revendication 2, **caractérisé en ce que** chacun des profils (7, 8) de dent présente des sommets (12) de dent et des pieds (13) de dent, entre les sommets (12) de dent et les pieds (13) de dent de chacun des profils (7, 8) de dent est aménagé un interstice dans toutes les plages de température de fonctionnement.

4. Procédé de fabrication d'un disque de frein composite, le disque de frein composite (1) comprenant une cloche (2) de disque de frein et au moins un cylindre creux (3, 3') de frein correspondant, les flancs (10) de dent de la cloche de disque de frein du profil (7) de dent de la cloche (7) de disque de frein ainsi que les flancs (11) de dent du cylindre creux de frein du profil (8) de dent de cylindre creux de frein présentant dans la zone d'assemblage (6) différents ajustages, la cloche (2) de disque de frein et l'au moins un cylindre creux (3, 3') de frein étant reliés l'un à l'autre selon un processus d'assemblage, dans une zone d'assemblage (6) un profil intérieur (8) de dent de cylindre creux de frein s'engrenant dans un profil (7) de dent de cloche de disque de frein, le profil intérieur (8) de dent de cylindre creux de frein et/ou le profil de (7) de dent (7) de cloche de disque de frein étant déformé(s) élastiquement et plastiquement au moins dans la zone de chacun des flancs (10, 11) de dent en raison du processus d'assemblage.
